# EUROPÄISCHE PATENTSCHRIFT

(11) **EP 0 974 611 B1**
(45) Veröffentlichungstag und Bekanntmachung des Hinweises auf die Patenterteilung: **31.03.2004**
(21) Anmeldenummer: 99113978.3
(22) Anmeldetag: 17.07.1999
(51) Int. Cl.: C08G 63/183, C08J 11/22, C08G 18/42, C08G 63/16, C07C 29/128, C07C 29/09

(54) **Verfahren zur Herstellung von Polyesterpolyolen**
Process for the manufacture of polyester polyols
Procédé pour la préparation de polyester-polyols

(30) Priorität: 22.07.1998 DE 19832885
(43) Veröffentlichungstag der Anmeldung: 26.01.2000
(73) Patentinhaber: BASF AKTIENGESELLSCHAFT, 67056 Ludwigshafen (DE)
(72) Erfinder: Berger, Elke, 01968 Senftenberg (DE); Tischer, Gerlinde, 01945 Ruhland (DE); Güttes, Bernd, 03238 Sallgast (DE); Büttner, Johannes, 01993 Schipkau (DE); Lampert, Klaus, Dr., 67273 Weisenheim (DE)

(56) Entgegenhaltungen:
- EP-A- 0 248 570
- EP-A- 0 982 338
- US-A- 4 439 546
- US-A- 4 439 550

## Beschreibung

Die Erfindung betrifft ein Verfahren zur Herstellung von Polyesterpolyolen auf Basis von Alkoholen und Carbonsäuren und/oder Carbonsäurederivaten sowie Polyalkylenterephthalat sowie die Verwendung dieser Polyesterpolyole zur Herstellung von Polyurethanen (PUR), insbesondere PUR-Hartschaum.

Polyesterpolyole stellt man bekannterweise aus Polycarbonsäuren und mehrfunktionellen Alkoholen durch Kondensation in der Schmelze her, wobei üblicherweise Katalysatoren, wie z.B. Zinnoder Titanverbindungen, eingesetzt werden. Verfahren zur Herstellung und Eigenschaften der Polyesterpolyole für PUR werden in zahlreichen Patent-und Literaturveröffentlichungen beschrieben.

Beispielhaft genannt sei das Kunststoffhandbuch, BandVII, Polyurethane, Carl-Hanser-Verlag, München, 1. Auflage 1966, herausgegeben von Dr. R. Vieweg und Dr. A. Höchtlen, sowie 2. Auflage 1983 und 3. Auflage 1993, herausgegeben von Dr. G. Oertel.

Es ist auch bekannt, zur Herstellung von Polyesterpolyolen Polyalkylenterephthalate (PAT), insbesondere Polyethylenterephthalat (PET)- und Polybutylenterephthalat (PBT)-Recyclate, mitzuverwenden. Aufgrund des immer stärker werdenden Anfalls von PET-Abfall gibt es neben der Zerkleinerung mit anschließender neuer Formgebung auch Verfahren, diese Abfälle chemisch aufzuarbeiten und neuen Anwendungsgebieten zuzuführen. Bisher ist es jedoch nicht gelungen, klare niedrigviskose Polyesteralkohole unter Einsatz von PAT in einer Stufe zu synthetisieren, die dann in üblichen Abmischungen zur PUR-Herstellung nicht zu Trübungen und Ausfällungen führen. Oftmals sind bereits die hergestellten Polyesterpolyole trüb.

So wird z.B. im EP-A-0710686 in mehreren Schritten PET mit Diethylenglykol umgeestert und durch Abdestillation von Diol die gewünschte OH-Zahl eingestellt. Das entstehende Produkt ist jedoch eine Suspension mit dem großen Nachteil, daß Sedimentationen auftreten und in wasserhaltigen PUR-Abmischungen Flockenbildung zu beobachten ist. Andere Schriften (DE-A-4227299, DE-A-19534276) haben die teilweise oder vollständige Aufspaltung in die Ausgangskomponenten zum Ziel, wofür sie aber mehrere Schritte benötigen. Weiterhin ist eine aufwendige Reinigung der Spaltprodukte notwendig, um diese wieder für neue Synthesen einsetzen zu können. Auch DE-A-3435014 hat den Nachteil, nur über mehrere Stufen zu einer polyolhaltigen Flüssigkeit zu kommen. Das in DE-A-19630283 dargestellte Verfahren ist ebenfalls ein Mehrstufenverfahren, in dem das PAT während der ersten Stufe in einem weiteren Teilschritt erst zu einem späteren Zeitpunkt während der bereits erfolgenden Kondensation zugegeben wird und in mindestens einem weiteren Schritt der Zusatz katalytisch wirkender Substanzen erfolgt. Das in der DE-Anmeldung Nr. 19748142.6 beschriebene Verfahren führt durch den hohen Anteil monofunktioneller Carbonsäuren zu einem vorzeitigen Abbruch der Polykondensation. Der entstehende Polyesteralkohol besitzt deshalb einen hohen Anteil inerter und/oder monofunktioneller Esterverbindungen. Da Polyesteralkohole hauptsächlich in der PUR-Herstellung eingesetzt werden, ist der PUR-Aufbau folglich ebenfalls ungenügend. Die gewünschten anwendungstechnischen Parameter der PUR-Produkte werden nicht erreicht oder es entstehen von vornherein nur fehlstellenbehaftete PUR-Teile, falls eine Reaktion in ausreichendem Maß überhaupt stattfindet.

In EP-A-0220793 wird die Systemverträglichkeit von Polyolblends nur über den Einbau von monofunktionellen hydrophoben Verbindungen, die einen Kettenabbruch bewirken, bzw. Polyethern erreicht und dies auch nur für wasserfreie Systeme.

Der vorliegenden Erfindung lag die Aufgabe zugrunde, durch ein geeignetes Verfahren und eine geeignete Rohstoffauswahl einen hydroxylfunktionellen Polyester unter Einsatz von PAT herzustellen, wobei nur eine Verfahrensstufe benötigt wird und das entstehende Polyesterpolyol sowohl selbst als auch in wasserhaltigen PUR-Systemabmischungen keinerlei Trübungen aufweist bzw. nicht zu Ausflockungen führt sowie einen einwandfreien PUR-Aufbau gewährleistet.

Diese Aufgabe wurde erfindungsgemäß dadurch gelöst, daß für die Polykondensation eine Rohstoffkombination eingesetzt wird, die neben dem PAT ein Gemisch (I) aus einem oder mehreren Alkoholen mit mindestens zwei Hydroxylgruppen und 10 bis 30 Masse-% einer oder mehrerer linearer Alkandiolester von aliphatischen C₂- bis C₄-Dicarbonsäuren mit einem mittleren Estermolekulargewicht von bis zu 500 und/oder cyclischer Esterverbindungen sowie ein Gemisch (II) aus 10 bis 33 Masse-% Bernsteinsäure, 39 bis 50 Masse-% Glutarsäure und 18 bis 45 Masse-% Adipinsäure enthält, wobei das Verhältnis der Bestandteile a) zu b) zu c) in Masse-% (35 bis 60) zu (10 bis 25) zu (20 bis 55) beträgt und sich die Anteile auf 100 Masse-% ergänzen.

Gegenstand der Erfindung ist demzufolge ein Verfahren zur Herstellung von Polyesterpolyolen auf Basis von Alkoholen und Carbonsäuren und/oder Carbonsäurederivaten sowie PAT, das dadurch gekennzeichnet ist, daß für die Polykondensation eine Rohstoffkombination, enthaltend
a) ein Gemisch (I) aus einem oder mehreren Alkoholen mit mindestens zwei Hydroxylgruppen und 10 bis 30 Masse-% einer oder mehrerer linearer Alkandiolester von aliphatischen C₂- bis C₄-Dicarbonsäuren mit einem mittleren Estermolekulargewicht von bis zu 500 und/oder cyclischer Esterverbindungen,
b) ein Gemisch (II) aus 10 bis 33 Masse-% Bernsteinsäure, 39 bis 50 Masse-% Glutarsäure und 18 bis 45 Masse-% Adipinsäure und
c) PAT,
eingesetzt wird, wobei das Verhältnis der Bestandteile a) zu b) zu c) in Masse-% (35 bis 60) zu (10 bis 25) zu (20 bis 55) beträgt und sich die Anteile auf 100 Masse-% ergänzen.

Gegenstände der Erfindung sind weiterhin die nach diesem Verfahren hergestellten Polyesterpolyole sowie deren Verwendung zur Herstellung von PUR, insbesondere PUR-Hartschaum.

Es war überraschend und in keiner Weise vorhersehbar, daß hochmolekulare PAT-Abfälle, wie z.B. PET oder PBT, unter Zugabe eines Diol/Ester-Gemisches (I) und des Dicarbonsäure-Gemisches (II) zu klaren, niedrigviskosen Polyesterpolyolen mit verminderter Kristallisationsneigung in einem Schritt umgesetzt werden können.

Vielmehr war zu erwarten gewesen, daß durch gleichzeitige Vorlage hochmolekularen PAT's neben monomeren Esterbausteinen eine stetige Phasentrennung erhalten bleibt, eine chemische Kombination aller Reaktionspartner also nicht stattfindet. Weiterhin war nicht vorherzusehen, daß der Einsatz von cyclischen Estern, z.B. Diethylenglykoladipat, die Kristallisationsneigung stark vermindert, während bei Einsatz der Einzelkomponenten, z.B. Diethylenglykol und Adipinsäure, ein durch Kristallisation trüber Polyesteralkohol entsteht.

Nach diesem Verfahren entsteht ein homogenes Polyesterpolyol, das auch über Wochen selbst oder im Gemisch als polyolische PUR-Systemkomponente stabil bleibt. Es weist auch in wasserhaltigen Abmischungen keine Trübungen auf und flockt nicht aus.

Es war weiterhin überraschend, daß sich mit diesem einstufigen Verfahren alle verfügbaren PAT-Produkte verlustlos zu homogenen Polyolen verarbeiten lassen. Die aus diesen Polyolen hergestellten PUR, insbesondere PUR-Hartschäume, sind von hoher Qualität.

Sie weisen einen regelmäßigen PUR-Aufbau auf und sind problemlos zu verarbeiten. Aushärtung und Fließfähigkeit sind optimal und die physiko-mechanischen Kennwerte entsprechen den hohen Anforderungen an technischen Hartschaum.

Es wurde somit ein wirtschaftliches Verfahren zur Herstellung von Polyesterpolyolen gefunden, die sich zu hochwertigen PUR, insbesondere PUR-Hartschaumstoffen für das Bauwesen sowie den Kühl- und Fernwärmebereich, verarbeiten lassen.

Zu den für die erfindungsgemäße Herstellung der Polyesterpolyole verwendeten Ausgangsstoffen ist folgendes auszuführen:

Das Gemisch (I) besteht aus einem oder mehreren Alkoholen mit mindestens zwei Hydroxylgruppen und 10 bis 30 Masse-% einer oder mehrerer linearer Alkandiolester von aliphatischen C₂- bis C₄-Dicarbonsäuren mit einem mittleren Estermolekulargewicht von bis zu 500 und/oder cyclischer Esterverbindungen.

Als mehrfunktionelle Alkohole werden vorzugsweise Alkandiole und/ oder Alkantriole mit 2 bis 10 Kohlenstoffatomen und/oder Etherdiole mit 4 bis 20 Kohlenstoffatomen eingesetzt. Insbesondere werden Monoglykole und/oder Monotriole, wie beispielsweise Butandiol-1,3 und -1,4, Hexandiole, Neopentylglykol, Ethylen- und/oder Propylenglykol, Glyzerin und/oder Trimethylolpropan und als Etherdiole vorzugsweise Di-, Tri- und / oder Polyethylenglykole und/oder Di-, Tri- und/oder Polypropylenglykole mit einem mittleren Molekulargewicht von bis zu 1000 eingesetzt. Besonders bevorzugt wird Diethylenglykol verwendet.

Als lineare Alkandiolester von aliphatischen C₂ - bis C₄-Dicarbonsäuren mit einem mittleren Estermolekulargewicht von bis zu 500 werden bevorzugt lineare Diethylenglykoladipate eingesetzt. Als cyclische Esterverbindungen kommen in Betracht: C₂ₙ-Diol-Ester aliphatischer C₂ₙ-Dicarbonsäuren (n=1 bis 3). Bevorzugt werden Adipinsäureester, insbesondere cyclische Diethylenglykoladipate.

Üblicherweise wird als Gemisch (I) eine Zusammensetzung von C₂bis C₆-Diol, bevorzugt Diethylenglykol, und Diethylenglykoladipat, wobei der Ester in einer Menge von 10 bis 30 Masse-%, bevorzugt 12 bis 25 Masse-% verwendet wird, eingesetzt.

Das Gemisch (II) besteht erfindungsgemäß aus 10 bis 33 Masse-% Bernsteinsäure, 39 bis 50 Masse-% Glutarsäure und 18 bis 45 Masse-% Adipinsäure. Insbesondere bewährt hat sich ein Gemisch aus 17 bis 21 Masse-% Bernsteinsäure, 45 bis 47 Masse-% Glutarsäure und 35 bis 38 Masse-% Adipinsäure.

Daneben können in geringen Mengen, höchstens 5 Masse-%, bezogen auf den Reaktionsansatz, weitere Säurekomponenten, beispielsweise weitere üblicherweise verwendete Dicarbonsäuren, insbesondere C₂bis C₄-Dicarbonsäuren, wie Phthalsäure, Itaconsäure, Isophthalsäure und/oder deren Anhydride mitverwendet werden.

Als PAT können alle verfügbaren PAT-Produkte einzeln oder im Gemisch untereinander eingesetzt werden. Vorzugsweise kommen PET und/oder PBT in Frage.

Insbesondere werden PAT-Abfälle, wie PBT- und PET-Granulate aus dem Recycling von PBT- bzw. PET-Teilen, -Filmen, -Fasern und-Folien oder auch PBT- bzw. PET-Abfälle der Produktion, eingesetzt.

Die Bestandteile a) [Gemisch (I)], b) [Gemisch (II)] und c) [PAT] werden dabei in einem Verhältnis von a) : b) : c) von (35 bis 60) : (10 bis 25) : (20 bis 55), Angaben jeweils in Masse-%, eingesetzt, wobei sich die Anteile auf 100 Masse-% ergänzen. Bevorzug wird ein Verhältnis von a) : b) : c) von (40 bis 50) : (15 bis 20) : (40 bis 50).

Die Herstellung des erfindungsgemäßen Polyesterpolyols erfolgt vorzugsweise gezielt in einem Syntheseschritt. Die Polykondensation wird dabei nach Vorlage aller Ausgangsstoffe bei Temperaturen von 180 bis 250 °C unter Normaldruck solange durchgeführt, bis ein homogenes klares Reaktionsgemisch entsteht. Danach wird unter vermindertem Druck die Veresterung bis zum Erreichen der angestrebten Kenndaten weitergeführt.

Nach einer besonders bevorzugten Ausführungsform werden alle Rohstoffe (PAT, Gemisch (I) und Dicarbonsäuregemisch (II) in ein temperierbares und evakuierbares Reaktionsgefäß, welches mit einem Rührwerk und einer Kolonne zur Abtrennung des entstehenden Reaktionswassers verbunden ist,gegeben und anschließend das Gemisch aufgeheizt. Nach Erreichung einer Temperatur von 180 bis 250°C, bevorzugt 220 bis 240°C, erfolgt zunächst unter Normaldruck die Lösung aller Rohstoffe zu einer klaren homogenen Phase unter gleichzeitigem Beginn der Veresterungsreaktion, die dann unter einem reduzierten Druck von 0,001 bis 0,05 MPa, bevorzugt 0,0015 bis 0,02 MPa, bis zur Erreichung der gewünschten Produktparameter fortgeführt wird.

Üblicherweise erfolgt die Kontrolle des Umsatzes über die Bestimmung der Säurezahl. Die angestrebten Produktparameter richten sich nach dem Einsatzgebiet des Polyesteralkohols und werden über die Rohstoffe, ihre Funktionalität und ihren Verzweigungsgrad sowie ihr molares Verhältnis gesteuert. So haben sich z.B. für den Hartschaum im Bauwesen Säurezahlen unter 2 mg KOH/g und OH-Zahlen im Bereich 200 bis 300 mg KOH/g bewährt.

Die Reaktion kann unter Zusatz der für die Veresterung üblichen metallorganischen Katalysatoren beschleunigt werden. Als katalytisch wirksame Substanzen bei der Kondensationsreaktion werden bevorzugt Titan- und/oder Zinnverbindungen und/oder Lewissäuren in Mengen bis 1000 ppm, beispielsweise Titantetrabutylat, Zinn(II)-octoat oder Zinn(II)-chlorid, eingesetzt. Besonders bevorzugt verwendet werden Titantetrabutylat und Zinn (II)-octoat.

Die erfindungsgemäß hergestellten Polyesterpolyole weisen eine Funktionalität von mindestens 2, vorzugsweise von 2 bis 2,5, eine Säurezahl von 0,3 bis 1,9 mg KOH/g und ein Molekulargewicht von 300 bis 1000 auf, wobei in Abhängigkeit von diesen Kennwerten sich eine OH-Zahl im Bereich von 110 bis 470 mg KOH/g einstellt. Die Viskosität bei 25°C beträgt üblicherweise 1200 bis 15000 mPas. Bevorzugt sind zweifunktionale Ester mit einer Säurezahl von 0,7 bis 1,5 mg KOH/g, einer OH-Zahl von 230 bis 350 mg KOH/g und einer Viskosität bei 25°C von 1500 bis 4500 mPas.

Das so hergestellte klare Polyesterpolyol führt auch als Bestandteil von wasserhaltigen Abmischungen von PUR-A-Komponenten, z.B. für den Einsatz im technischen Hartschaum, nicht zu Trübungen oder Ausflockungen.

Die erfindungsgemäß hergestellten Polyesterpolyole können bei Bedarf einer üblichen Nachbehandlung unterzogen werden.

Die Polyesterpolyole werden, gegebenenfalls im Gemisch mit weiteren höhermolekularen Verbindungen mit mindestens zwei reaktiven Wasserstoffatomen, auf übliche Art und Weise mit organischen und/oder modifizierten organischen Di- und/oder Polyisocyanaten und weiteren üblichen Komponenten zu PUR, insbesondere PUR-Hartschäumen, umgesetzt.

Diese Schaumstoffe weisen bei einem gleichbleibend hohem mechanischen Eigenschaftsniveau eine hohe Härte und eine niedrige Wärmeleitfähigkeit auf und eignen sich insbesondere für die Verwendung im Kühl- und Fernwärmebereich sowie im Bauwesen.

Ausführungen zu den bei der PUR-Herstellung auf Basis von Polyesterpolyolen üblicherweise verwendeten Ausgangsstoffen, den Reaktionsbedingungen und den Eigenschaften der Produkte sind in der Fach- und Patentliteratur enthalten. Beispielhaft genannt sei das weiter oben bereits zitierte Kunststoffhandbuch, Band VII, Polyurethane, Carl-Hanser-Verlag, München.

Die Erfindung wird in den nachfolgenden Ausführungsbeispielen näher erläutert.

### Beispiel 1 (erfindungsgemäß)

| | |
|---|---|
| 175,000 g | Dicarbonsäure-Gemisch (26 Masse-% Bernsteinsäure, 48 Masse-% Glutarsäure und 25 Masse-% Adipinsäure enthaltend) |
| 450,993 g | Diethylenglykol/Ester-Gemisch (12,5 Masse-% Diethylenglykoladipat enthaltend) |
| 420,656 g | PET (Flaschenrecyclat) |

wurden in ein beheizbares Reaktionsgefäß mit Rührwerk und aufgesetzter Destillationskolonne zur Entfernung des freiwerdenden Reaktionswassers gegeben und nach dem Aufheizen auf 220°C, wobei ständig gerührt wurde, 8 Stunden unter Stickstoff bei Normaldruck zu einem homogenen Reaktionsprodukt verarbeitet. Nach einer Druckreduzierung auf 0,03 MPa erfolgte die Polykondensation bis zur Säurezahl von 0,38 mg KOH/g. Das Endprodukt mit einer OH-Zahl von 247 mg KOH/g war klar und besaß bei 25°C eine Viskosität von 4300 mPa s.

### Beispiel 2 (erfindungsgemäß)

| | |
|---|---|
| 175,000 g | Dicarbonsäure-Gemisch (26 Masse-% Bernsteinsäure, 48 Masse-% Glutarsäure und 25 Masse-% Adipinsäure enthaltend) |
| 528,216 g | Diethylenglykol/Ester-Gemisch (21,4 Masse-% Diethylenglykoladipat enthaltend) |
| 343,433 g | PET (Feinanteil aus der Flaschenrecyclierung) |

wurden nach der Dosierung und Aufheizung wie in Beispiel 1 beschrieben 5 Stunden bei 220°C unter Stickstoff bei Normaldruck verestert und nach Weiterführung der Reaktion bei einem Druck von 0,017 MPa wies das klare Fertigprodukt folgende Spezifikation auf:

| | |
|---|---|
| OH-Zahl | = 249 mg KOH/g |
| Säurezahl | = 0,15 mg KOH/g |
| Viskosität^{25°C} = | 2550 mPa s |

### Beispiel 3 (erfindungsgemäß)

| | |
|---|---|
| 420,0 g | Dicarbonsäure-Gemisch (27 Masse-% Bernsteinsäure, 46 Masse-% Glutarsäure und 26 Masse-% Adipinsäure enthaltend) |
| 1267,7 g | Diethylenglykol/Ester-Gemisch (24,4 Masse-% Diethylenglykoladipat enthaltend) |
| 824,1 g | PBT (sogenannte Wirre aus dem Anfahrprozeß) |

wurden in einem beheizten 4 1-Vierhalsrundkolben, der mit einem Rührwerk und Destillationsaufsatz verbunden war, unter Normaldruck und N₂-Atmosphäre einer neunstündigen Reaktion bei 220°C unterzogen und anschließend bei 0,01 MPa zu einem Endprodukt mit folgenden Kennwerten geführt, welches klar war:

| | |
|---|---|
| OH-Zahl | = 245 mg KOH/g |
| Säurezahl | = 0,36 mg KOH/g |
| Viskosität^{25°C} | = 2190 mPa s |

### Beispiel 4 (Vergleich)

| | |
|---|---|
| 97,2 g | Adipinsäure |
| 201,9 g | Diethylenglykol |
| 280,4 g | PET (Flaschenrecyclat) |

wurden in einem beheizten 1 l-Vierhalsrundkolben, der mit einem Rührwerk und Destillationsaufsatz verbunden war, 6 Stunden bei 220°C unter Stickstoff bei Normaldruck umgeestert bzw. polykondensiert. Der entstandene Polyesteralkohol war stark trüb und besaß eine Viskosität von 9619 mPa s (25°C) bei einer OH-Zahl von 247 mg KOH/g und einer Säurezahl von 0,46 mg KOH/g.

### Beispiel 5 (Vergleich)

| | |
|---|---|
| 11,82 g | Adipinsäure |
| 277,98 g | Diethylenglykol/Ester-Gemisch (35,8 Masse-% Diethylenglykoladipat enthaltend) |
| 312,60 g | PET (Flaschenrecyclat) |

wurden wie in Beispiel 5 beschrieben 10 Stunden unter Normaldruck umgeestert bzw. polykondensiert und nach Zugabe von 10 ppm Titantetrabutylat und weiterer Polykondensation bei 0,002 MPa erhielt man einen stark trüben Polesteralkohol mit folgenden Kennwerten:

| | |
|---|---|
| OH-Zahl | = 254 mg KOH/g |
| Säurezahl | = 0,77 mg KOH/g |
| Viskosität^{25°C} | = 7015 mPa s |

### Beispiel 6 (Vergleich)

| | |
|---|---|
| 97,2 g | Dicarbonsäure-Gemisch (21 Masse-% Bernsteinsäure, 47 Masse-% Glutarsäure und 30 Masse-% Adipinsäure enthaltend) |
| 207,6 g | Diethylenglykol |
| 276,5 g | PET (Feinanteil aus der Flaschenrecyclierung) |

wurden 15 Stunden wie in Beispiel 5 beschrieben unter Normaldruck umgeestert bzw. polykondensiert und bei 0,0016 MPa zu einem trüben Polyesteralkohol als Endprodukt geführt:

| | |
|---|---|
| OH-Zahl | = 248 mg KOH/g |
| Säurezahl | = 1,0 mg KOH/g |
| Viskosität^{25°C} | = 6540 mPa s |

### Beispiel 7 (erfindungsgemäß)

Für ein PUR-Hartschaumsystem (Spritzschaum) wurde folgende Abmischung hergestellt:

| | |
|---|---|
| 67,7 Gew.-Tle. | Elastopor® H 1612/1¹⁾ |
| 20,0 Gew.-Tle. | Polyesterpolyol nach Beispiel 1 |
| 15,3 Gew.-Tle. | Treibmittel 141b (Dichlorfluorethan) |

| | |
|---|---|
| ¹⁾Produkt der Elastogran GmbH | |

Auch nach 6 Monaten Lagerung war die Mischung noch klar und homogen.

### Beispiel 8 (Vergleich)

Analog Beispiel 7 wurde eine Abmischung mit dem nach Beispiel 4 erhaltenen Polyesteralkohol hergestellt. Bereits nach 1 Woche setzte sich aus der trüben Mischung am Gefäßboden ein heller Niederschlag ab.

## Patentansprüche

1. Verfahren zur Herstellung von Polyesterpolyolen auf Basis von Alkoholen und Carbonsäuren und/oder Carbonsäurederivaten sowie Polyalkylenterephthalat, **dadurch gekennzeichnet, daß** für die Polykondensation eine Rohstoffkombination, enthaltend
a) ein Gemisch (I) aus einem oder mehreren Alkoholen mit mindestens zwei Hydroxylgruppen und 10 bis 30 Masse-% einer oder mehrerer linearer Alkandiolester von aliphatischen C₂- bis C₄-Dicarbonsäuren mit einem mittleren Estermolekulargewicht von bis zu 500 und/oder cyclischer Esterverbindungen,
b) ein Gemisch (II) aus 10 bis 33 Masse-% Bernsteinsäure, 39 bis 50 Masse-% Glutarsäure und 18 bis 45 Masse-% Adipinsäure und
c) Polyalkylenterephthalat,
eingesetzt wird, wobei das Verhältnis der Bestandteile a) zu b) zu c) in Masse-% (35 bis 60) zu (10 bis 25) zu (20 bis 55) beträgt und sich die Anteile auf 100 Masse-% ergänzen.

2. Verfahren nach Anspruch 1, **dadurch gekennzeichnet, daß** das Gemisch (I) als Alkohol mit mindestens zwei Hydroxylgruppen Diethylenglykol enthält.

3. Verfahren nach Anspruch 1 oder 2, **dadurch gekennzeichnet, daß** das Gemisch (I) als lineare Alkandiolester von aliphatischen C₂- bis C₄-Dicarbonsäuren mit einem mittleren Estermolekulargewicht von bis zu 500 und/oder cyclische Esterverbindungen Diethylenglykoladipate enthält.

4. Verfahren nach einem der Ansprüche 1 bis 3, **dadurch gekennzeichnet, daß** der Anteil des cyclischen Esters im Gemisch (I) 12 bis 25 Masse-% beträgt.

5. Verfahren nach einem der Ansprüche 1 bis 4, **dadurch gekennzeichnet, daß** das Dicarbonsäuregemisch (II) aus 17 bis 21 Masse-% Bernsteinsäure, 45 bis 47 Masse-% Glutarsäure und 35 bis 38 Masse-% Adipinsäure besteht.

6. Verfahren nach einem der Ansprüche 1 bis 5, **dadurch gekennzeichnet, daß** als Polyalkylenterephthalat Polyethylenterephthalat und/oder Polybutylenterephthalat eingesetzt werden.

7. Verfahren nach einem der Ansprüche 1 bis 6, **dadurch gekennzeichnet, daß** das Verhältnis der Bestandteile a) zu b) zu c) in Masse-% (40 bis 50) zu (15 bis 20) zu (40 bis 50) beträgt.

8. Verfahren nach einem der Ansprüche 1 bis 7, **dadurch gekennzeichnet, daß** die Reaktionsführung gezielt in einem Syntheseschritt erfolgt.

9. Verfahren nach einem der Ansprüche 1 bis 8, **dadurch gekennzeichnet, daß** die Polykondensation nach Vorlage aller Ausgangsstoffe bei Temperaturen von 180 bis 250 °C unter Normaldruck solange erfolgt, bis ein homogenes klares Reaktionsgemisch entsteht, und danach die weitere Veresterung bis zum Erreichen der angestrebten Kenndaten unter vermindertem Druck durchgeführt wird.

10. Polyesterpolyole, hergestellt nach einem Verfahren gemäß den Ansprüchen 1 bis 9.

11. Polyesterpolyole nach Anspruch 10, **dadurch gekennzeichnet, daß** sie eine Funktionalität von mindestens 2, eine Säurezahl von 0,3 bis 1,9 mg KOH/g und ein Molekulargewicht von 300 bis 1000 aufweisen.

12. Verwendung der Polyesterpolyole gemäß Anspruch 10 oder 11 zur Herstellung von Polyurethanen, insbesondere Polyurethanhartschaum.

## Claims

1. A process for preparing polyester polyols on the basis of alcohols and carboxylic acids and/or carboxylic acid derivatives plus polyalkylene terephthalate, wherein the polycondensation is carried out using a raw material combination comprising
a) a mixture (I) of one or more alcohols having at least two hydroxyl groups and from 10 to 30% by mass of one or more linear alkanediol esters of aliphatic C₂- to C₄-dicarboxylic acids having a mean ester molecular weight of up to 500 and/or cyclic ester compounds,
b) a mixture (II) of from 10 to 33% by mass of succinic acid, from 39 to 50% by mass of glutaric acid and from 18 to 45% by mass of adipic acid and
c) polyalkylene terephthalate,
and the mass ratio of the constituents a) to b) to c) is (35-60):(10-25):(20-55), where the proportions add up to 100% by mass.

2. A process as claimed in claim 1, wherein the mixture (I) comprises diethylene glycol as alcohol having at least two hydroxyl groups.

3. A process as claimed in claim 1 or 2, wherein the mixture (I) comprises diethylene glycol adipates as linear alkanediol esters of aliphatic C₂- to C₄-dicarboxylic acids having a mean ester molecular weight of up to 500 and/or cyclic ester compounds.

4. A process as claimed in any of claims 1 to 3, wherein the proportion of cyclic ester in mixture (I) is from 12 to 25% by mass.

5. A process as claimed in any of claims 1 to 4, wherein the dicarboxylic acid mixture (II) comprises from 17 to 21% by mass of succinic acid, from 45 to 47% by mass of glutaric acid and from 35 to 38% by mass of adipic acid.

6. A process as claimed in any of claims 1 to 5, wherein polyethylene terephthalate and/or polybutylene terephthalate are used as polyalkylene terephthalate.

7. A process as claimed in any of claims 1 to 6, wherein the mass ratio of the constituents a) to b) to c) is (40-50):(15-20):(40-50).

8. A process as claimed in any of claims 1 to 7, wherein the reaction is carried out in a targeted manner in one synthetic step.

9. A process as claimed in any of claims 1 to 8, wherein, after charging of all starting materials, the polycondensation is carried out at from 180 to 250°C under atmospheric pressure until a homogeneous clear reaction mixture is formed and the further esterification is then carried out under reduced pressure until the desired properties have been obtained.

10. A polyester polyol prepared by a process as claimed in any of claims 1 to 9.

11. A polyester polyol as claimed in claim 10 which has a functionality of at least 2, an acid number of from 0.3 to 1.9 mg KOH/g and a molecular weight of from 300 to 1000.

12. The use of a polyester polyol as claimed in claim 10 or 11 for producing polyurethanes, in particular rigid polyurethane foam.

## Revendications

1. Procédé de préparation de polyester-polyols à base d'alcools et d'acides carboxyliques et/ou de dérivés d'acides carboxyliques ainsi que de téréphtalate de polyalkylène, **caractérisé en ce qu'**on utilise pour la polycondensation une combinaison de matières premières contenant :
a) un mélange (I) d'un ou plusieurs alcools comportant au moins deux groupes hydroxyle et de 10 à 30% en masse d'un ou plusieurs esters linéaires d'alcanediols d'acides dicarboxyliques aliphatiques en C₂ à C₄ présentant un poids moléculaire moyen de l'ester allant jusqu'à 500 et/ou des composés esters cycliques,
b) un mélange (II) de 10 à 33% en masse d'acide succinique, de 39 à 50% en masse d'acide glutarique et de 18 à 45% en masse d'acide adipique et
c) du téréphtalate de polyalkylène,
le rapport des constituants a) à b) et à c) en pourcentage massique étant de (35 à 60) à (10 à 25) et à (20 à 55) et les proportions se complétant à 100% en masse.

2. Procédé selon la revendication 1, **caractérisé en ce que** le mélange (I) contient, comme alcool présentant au moins deux groupes hydroxyle, du diéthylèneglycol.

3. Procédé selon la revendication 1 ou 2, **caractérisé en ce que** le mélange (I) contient comme ester d'alcanediol linéaire d'acides dicarboxyliques aliphatiques en C₂ à C₄ ayant un poids moléculaire moyen de l'ester allant jusqu'à 500 et/ou, comme composés ester cycliques, des adipates de diéthylèneglycol.

4. Procédé selon l'une des revendication 1 à 3, **caractérisé en ce que** la proportion des esters cycliques dans le mélange (I) est de 12 à 25% massique.

5. Procédé selon l'une des revendications 1 à 4, **caractérisé en ce que** le mélange d'acides dicarboxyliques (II) se compose de 17 à 21% massique d'acide succinique, de 45 à 47% massique d'acide glutarique et de 35 à 38% massique d'acide adipique.

6. Procédé selon l'une des revendications 1 à 5, **caractérisé en ce qu'**on utilise comme téréphtalate de polyalkylène le téréphtalate de polyéthylène et/ou le téréphtalate de polybutylène.

7. Procédé selon l'une des revendications 1 à 6, **caractérisé en ce que** le rapport des constituants a) à b) et à c) en pourcentage massique s'élève à (40 à 50) à (15 à 20) et à (40 à 50).

8. Procédé selon l'une des revendications 1 à 7, **caractérisé en ce que** la conduite de la réaction s'effectue de façon ciblée dans une étape de synthèse.

9. Procédé selon l'une des revendications 1 à 8, **caractérisé en ce que** la polycondensation s'effectue après mise de tous les produits de départ à des températures allant de 180 à 250°C sous pression normale, jusqu'à ce qu'apparaisse un mélange réactionnel clair et homogène, puis **en ce qu'**on conduit l'estérification ultérieure jusqu'à obtention des caractéristiques recherchées à pression réduite.

10. Polyesters-polyols préparés selon un procédé de l'une des revendications 1 à 9.

11. Polyesters-poyols selon la revendication 10, **caractérisés en ce qu'**ils présentent une fonctionnalité d'au moins 2, un indice d'acide allant de 0,3 à 1,9 mg de KOH/g et un poids moléculaire allant de 300 à 1000.

12. Utilisation des polyesters-polyols selon la revendication 10 ou 11 pour la préparation de polyuréthanes, en particulier de mousse dure de polyuréthane.
